# EUROPÄISCHE PATENTSCHRIFT

(11) **EP 2 732 980 B1**
(45) Veröffentlichungstag und Bekanntmachung des Hinweises auf die Patenterteilung: **18.04.2018**
(21) Anmeldenummer: 13192345.0
(22) Anmeldetag: 11.11.2013
(51) Int. Cl.: B44C 3/12, E04F 13/14, E04F 15/08, B44C 1/28, G05B 19/4097

(54) **Fliesensatz**
Tile set
Jeu de carreaux

(30) Priorität: 14.11.2012 DE 102012220762
(43) Veröffentlichungstag der Anmeldung: 21.05.2014
(73) Patentinhaber: Kostulski, Thomas, 50968 Köln (DE)
(72) Erfinder: Kostulski, Thomas, 50968 Köln (DE)
(74) Vertreter: Claessen, Rolf

(56) Entgegenhaltungen:
- EP-A1- 0 759 366
- WO-A1-92/04701
- DE-U1- 20 110 447
- US-A- 2 715 289
- US-A- 5 568 391
- US-A1- 2004 254 670

## Beschreibung

Die Erfindung betrifft einen Fliesensatz, ein Verfahren zur Bereitstellung eines Fliesensatzes, ein Bildgebungsverfahren mithilfe von Fliesen und ein Computerprogramm.

Aus verschiedenen Gründen wurden bislang lediglich viereckige Fliesen mit verschiedenen Farben auf einer Fliese ausgestaltet. Dreieckige Fliesen fristeten bislang ein Schattendasein. Dreieckige Fliesen wurden bislang praktisch nicht als Bodenbelag oder Wandbelag eingesetzt. Diese gab es bislang nur einfarbig. Bislang gab es das Vorurteil, dass mit dreieckigen Fliesen keine attraktiven Muster erzeugt werden können.

DE 203 19 164 U1 betrifft eine Betonwerksteinplatte mit Oberbelag.

DE 201 10 447 U1 betrifft Fliesen für kombinatorische Erzeugung von Zufallsformen.

Die Aufgabe der vorliegenden Erfindung besteht darin, eine Technologie bereitzustellen, mit der attraktive Muster mithilfe von zwei dreieckigen Fliesenmustern erzeugt werden können.

Diese der Erfindung zu Grunde liegende Aufgabe wird in einer ersten Ausführungsform gelöst durch einen Fliesensatz gemäß Anspruch 1. Eine C3 Rotation ist eine Rotation um 120°. Eine C2 Rotation ist eine Rotation um 180°. Diese Begriffe sind der Gruppentheorie und insbesondere dem Bereich der Symmetrie entlehnt. Um langatmige Erläuterungen der Gruppentheorie zu vermeiden, wird auf das Buch "Aufbau der Moleküle" von F. Engelke, B.G. Teubner Stuttgart, 1992, 2. Aufl. verwiesen, in dem sich eine überraschend leicht verständliche Einführung in diese Thematik findet. Vorzugsweise sind die dreieckigen Fliesen gleichseitige dreieckige Fliesen. Es handelt sich bei dem Fliesensatz um eine Kombination aus einem Fliesentyp A und einem Fliesentyp B und es lässt sich das farbgebende Material mit jeweils gleicher Farbe durch eine Symmetrieoperation der Fliese des Fliesentyps A durch eine C2 Rotation entlang einer Rotationsachse durch eine Spitze des Dreiecks und der Mitte zwischen den zwei übrigen Spitzen in Form des Fliesentyps B abbilden. Vorzugsweise enthält der Fliesensatz den Fliesentyp A und den Fliesentyp B jeweils hälftig. Dadurch entsteht bei dem Fliesentyp B ein Spiegelbild des Fliesentyps A.

Vorzugsweise liegt die Dicke des farbgebenden Materials in einem Bereich von 0,01 bis 2 mm.

Vorzugsweise ist das farbgebende Material eine, insbesondere mit den herkömmlichen Druckverfahren aufgebrachte, anorganische gebrannte Glasur oder mittels Laserdruck aufgebrachtes Farbpigment. Der Druck von anorganischen Farbpigmenten mittels Laserdruck auf mineralische Substrate ist beispielsweise in DE 10 2008 049 967 beschrieben.

Das farbgebende Material ist vorzugsweise wenigstens aus 3 Farben ausgewählt. Unabhängig davon ist das farbgebende Material höchstens aus 5 Farben ausgewählt.

Die Fliesen bestehen vorzugsweise wenigstens zu 90 Gew.% aus Keramik oder Beton.

Das farbgebende Material ist vorzugsweise eine anorganische Glasur oder Laserdruck.

Die Dicke des farbgebenden Materials beträgt vorzugsweise höchstens 0,1 mm.

Vorzugsweise sind die Pigmente im farbgebenden Material anorganisch.

Die Sichtseite der Fliese gehört vorzugsweise der Symmetriegruppe Cᵢ oder C₂ᵥ an.

Die Kantenlänge einer Fliese beträgt vorzugsweise wenigstens 6 cm. Unabhängig davon beträgt die Kantenlänge einer Fliese vorzugsweise höchstens 50 cm.

Die Dicke der Fliesen liegt vorzugsweise in einem Bereich von 0,4 bis 2 cm.

Der Fliesensatz weist vorzugsweise wenigstens 50 Fliesen auf. Unabhängig davon weist der Fliesensatz vorzugsweise höchstens 5000 Fliesen auf.

In einer weiteren Ausführungsform wird die der Erfindung zu Grunde liegende Aufgabe gelöst durch ein Verfahren gemäß Anspruch 7. In einer weiteren Ausführungsform wird die der Erfindung zu Grunde liegende Aufgabe gelöst durch ein Bildgebungsverfahren mithilfe von Fliesen, wobei Fliesen aus dem erfindungsgemäßen Fliesensatz auf einem Untergrund so fixiert werden, dass die Kanten von aneinander angrenzenden Fliesen parallel zueinander verlaufen.

Vorzugsweise ist die Sichtseite eine Fliese zu der Sichtseite einer unmittelbar entlang einer Kante angrenzenden Fliese spiegelsymmetrisch verlegt, wobei das Spiegelelement ausgewählt ist aus
a. einer Punktspiegelung bezüglich des Mittelpunkts der Kante, und
b. einer Achsenspiegelung bezüglich der Kante.

Vorzugsweise liegt die Fugenbreite in einem Bereich von 0,1 bis 0,5 cm.

Vorzugsweise weist die breite der Fugen bei weniger als ein Prozent der Fugen mehr als 50 % vom medialen der Breite aller Fugen ab.

Vorzugsweise werden die Fliesen, sofern der Fliesensatz nur aus Fliesen des Fliesentyps A besteht, bei dem erfindungsgemäßen Bildgebungsverfahren so verlegt, dass nebeneinanderliegende Fliesen jeweils um 180° gedreht sind.

Vorzugsweise werden die Fliesen, sofern der Fliesensatz aus Fliesen des Fliesentyps A und des Fliesentyps B besteht, bei dem erfindungsgemäßen Bildgebungsverfahren so verlegt, dass zumindest zwei an eine Fliese angrenzende Fliesen vom jeweils anderen Fliesentyp sind und dass zumindest eine an die angrenzende Fliese wiederum angrenzende Fliese vom selben Fliesentyp ist und gegenüber der ursprünglichen Fliese um 120° gedreht ist.

In einer weiteren Ausführungsform wird die der Erfindung zu Grunde liegende Aufgabe gelöst durch ein Computerprogramm umfassend Programmbefehle, die den Computer dazu veranlassen das erfindungsgemäße Bildgebungsverfahren zumindest teilweise zu simulieren, wobei Dreiecke, die gemäß den Bedingungen für das farbgebende Material des erfindungsgemäßen Fliesensatzes erstellt wurden, nebeneinander so angeordnet werden, dass zwischen den Dreiecken gleichmäßige Fugen entstehen, wenn das Computerprogramm auf den Computer geladen oder auf dem Computer ausgeführt wird.

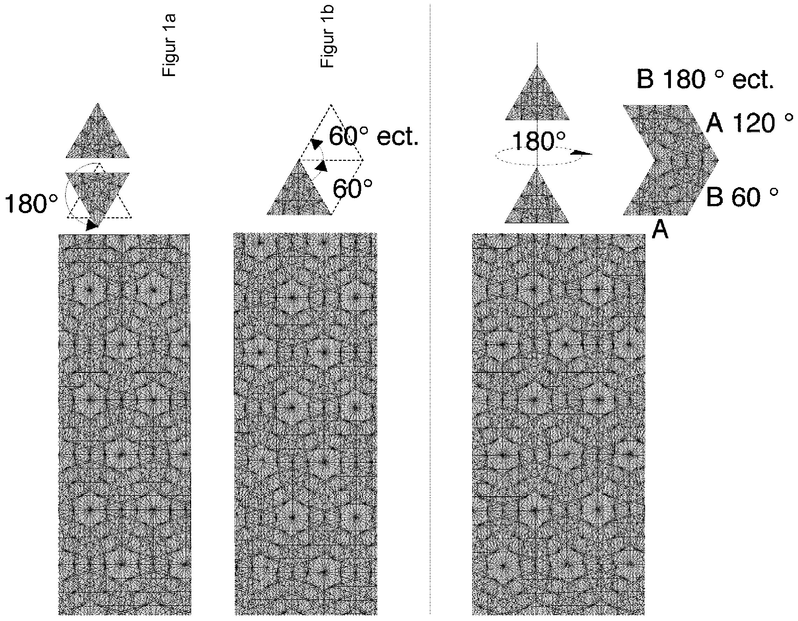

Fig. 1 zeigt eine Fliese vom Fliesentyp A. Die Fliese weist sowohl ein C3 als auch ein C2 Symmetrieelement auf.

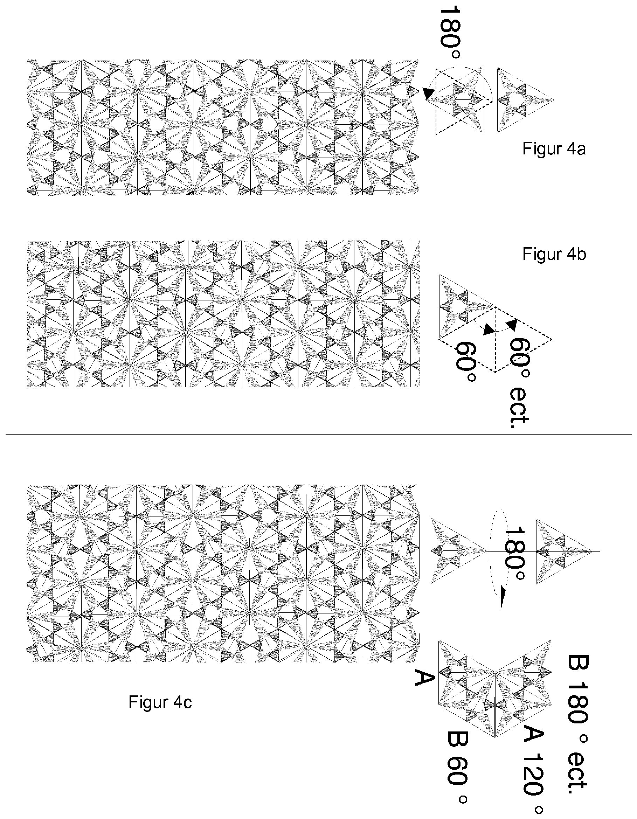

Fig. 2 und 4 zeigen links oben eine Fliese vom Fliesentyp A. Diese wird zum Verlegen um 180° gedreht (dargestellt) und dann versetzt verlegt, wie es auch auf der rechten Seite dargestellt ist. Das entstehende Muster ist unten zu sehen. Dieser Fliesentyp hat eine C2 Symmetrieachse in der Bildebene von der oberen Spitze zur Mitte der gegenüberliegenden Seite.

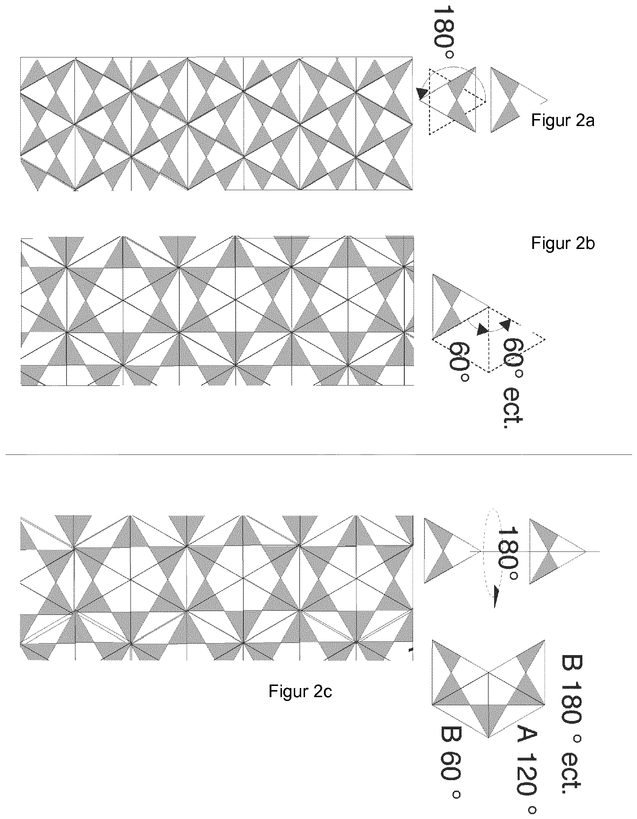

Fig. 2 zeigt links oben eine Fliese vom Fliesentyp A. Diese wird zum Verlegen um 180° gedreht (dargestellt) und dann versetzt verlegt, wie es auch auf der rechten Seite dargestellt ist. Das entstehende Muster ist unten zu sehen. Dieser Fliesentyp hat eine C3 Symmetrieachse senkrecht zur Bildebene in der Mitte des Dreiecks.

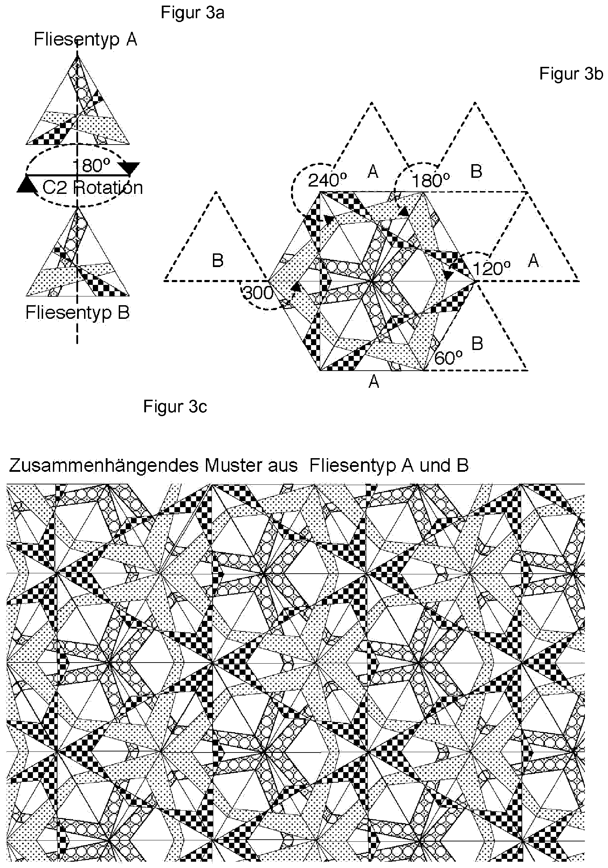

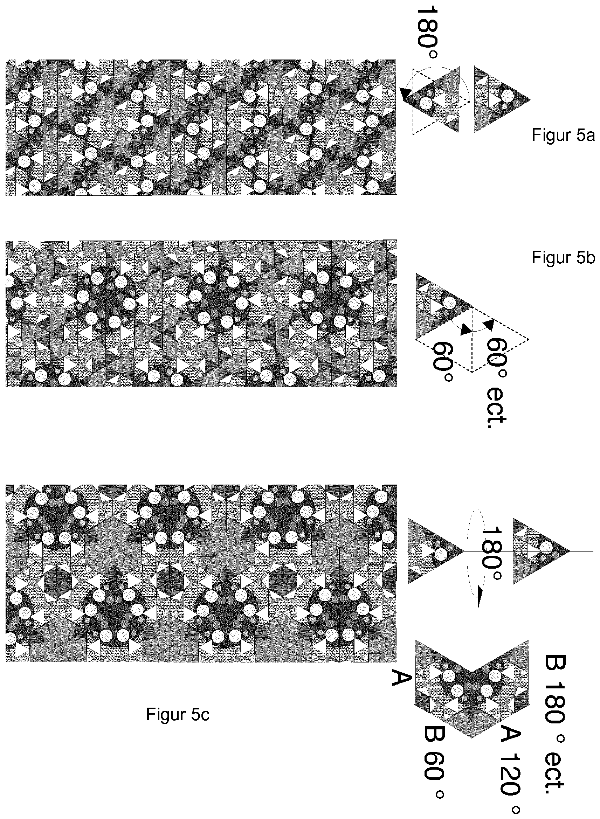

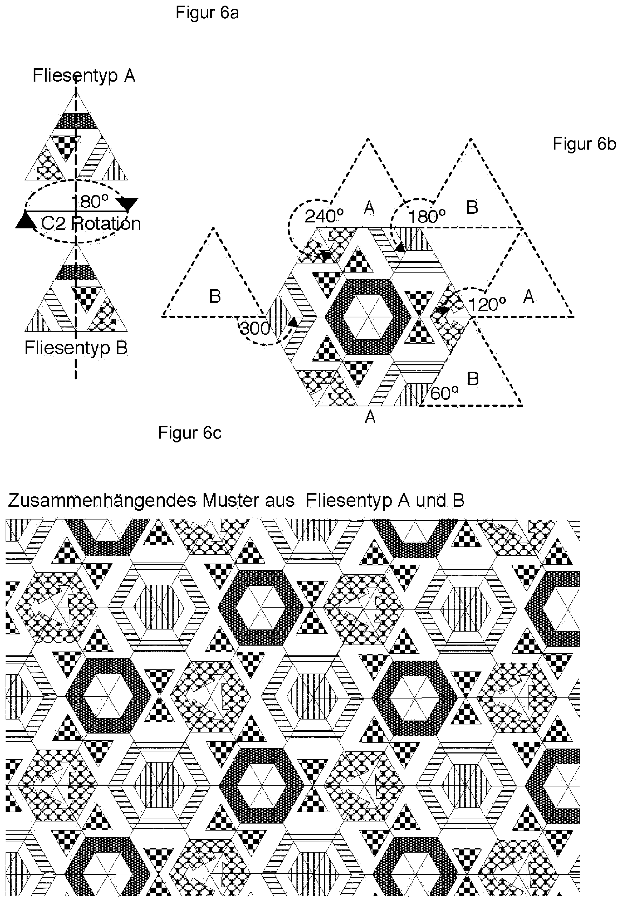

Fig. 3, 5 und 6 zeigen links oben eine Fliese vom Fliesentyp A. Durch eine C2 Rotation um die C2 Symmetrieachse in der Bildebene von der oberen Spitze zur Mitte der gegenüberliegenden Seite wird diese Fliese auf der darunter liegenden Fliese des Fliesentyps B abgebildet. Zum Verlegen wird neben eine Fliese des Fliesentyps A eine Fliese des Fliesentyps B gelegt und an diese Fliese des Fliesentyps B wieder eine Fliese des Fliesentyps A so angelegt, dass die Spitze dieser zweiten Fliese des Fliesentyps A die Spitze der ersten Fliese des Fliesentyps A berührt und gegenüber dieser ersten Fliese um 120° gedreht ist. So wird dann die Verlegung wie rechts dargestellt fortgesetzt. Es entsteht ein Muster wie unten dargestellt.

Das nachfolgende konkrete Ausführungsbeispiel soll lediglich der Veranschaulichung der Erfindung dienen und beschränkt also nicht den Schutzbereich der Patentansprüche.

Mithilfe eines Computerprogramms, das auf einem Computer ausgeführt wurde, wurde ein gleichseitiges Dreieck grafisch erzeugt, das dem Dreieck in Figur 2 links oben entsprach. Anschließend wurde dieses Dreieck durch das Computerprogramm durch eine Drehung bzw. Spiegelung so transformiert, dass das Dreieck entstand, welches rechts von dem vorgenannten Dreieck in Figur 2 zu sehen ist. Diese beiden Dreiecke wurden von dem Computerprogramm dupliziert und so miteinander kombiniert, dass das Muster rechts oben in Figur 2 entstand.

Anschließend wurden Keramikfliesen aus üblichem Material in Form von gleichzeitigen Dreiecken hergestellt. Die Kantenlänge dieser Fliesen betrug 8 cm. Die Dicke dieser Fliesen betrug 0,5 cm. Diese Fliesen wurden mit einer handelsüblichen Klausur mit verschiedenen Farben so platziert, dass auf der Hälfte der Fliesen das ursprüngliche mit dem Computerprogramm erzeugte Muster entstand und auf der anderen Hälfte der Fliesen das transformierte Muster entstand. Diese Klausur wurde entsprechend gebrannt. Die entstandenen Fliesen wurden so auf dem Boden mit üblichen Verfahren verlegt, dass das Muster rechts oben in Figur 2 entstand.

## Patentansprüche

1. Fliesensatz mit einem attraktiven Muster mithilfe von zwei dreieckigen Fliesenmustern, aus gleichschenkligen dreieckigen Fliesen zum Verkleiden von Böden oder Wänden, umfassend eine Kombination aus einem Fliesentyp A und einem Fliesentyp B, wobei bei dem Fliesensatz auf der Sichtseite farbgebendes Material ausgewählt aus wenigstens zwei verschiedenen Farben angeordnet ist, wobei sich das farbgebende Material mit jeweils gleicher Farbe durch eine Symmetrieoperation der Fliese des Fliesentyps A in Form des Fliesentyps B abbilden lässt, wobei die Symmetrieoperation eine C2 Rotation entlang einer Rotationsachse durch eine Spitze des Dreiecks und der Mitte zwischen den zwei übrigen Spitzen ist.

2. Fliesensatz gemäß Anspruch 1, **dadurch gekennzeichnet, dass** die dreieckigen Fliesen gleichseitige dreieckige Fliesen sind.

3. Fliesensatz gemäß einem der Ansprüche 1 oder 2, **dadurch gekennzeichnet, dass** es sich bei dem Fliesensatz um eine Kombination aus einem Fliesentyp A und einem Fliesentyp B handelt und sich das farbgebende Material mit jeweils gleicher Farbe durch eine Symmetrieoperation der Fliese des Fliesentyps A durch eine C2 Rotation entlang einer Rotationsachse durch eine Spitze des Dreiecks und der Mitte zwischen den zwei übrigen Spitzen in Form des Fliesentyps B abbilden lässt.

4. Fliesensatz gemäß einem der Ansprüche 1 bis 3, **dadurch gekennzeichnet, dass** er den Fliesentyp A und den Fliesentyp B jeweils hälftig enthält.

5. Fliesensatz gemäß einem der Ansprüche 1 bis 4, **dadurch gekennzeichnet, dass** die Dicke des farbgebenden Materials in einem Bereich von 0,01 bis 2 mm liegt.

6. Fliesensatz gemäß einem der Ansprüche 1 bis 5, **dadurch gekennzeichnet, dass** das farbgebende Material eine anorganische gebrannte Glasur oder mittels Laserdruck aufgebrachte Farbpigmente sind.

7. Verfahren zur Bereitstellung eines Fliesensatzes gemäß Anspruch 1, **dadurch gekennzeichnet, dass** man folgende Schritte durchführt:
a. Bereitstellung eines Fliesensatzes aus gleichschenkligen dreieckigen Fliesen zum Verkleiden von Böden oder Wänden, umfassend eine Kombination aus einem Fliesentyp A und einem Fliesentyp B,
b. Aufbringung von farbgebendem Material ausgewählt aus wenigstens zwei verschiedenen Farben auf der Sichtseite, wobei sich das farbgebende Material mit jeweils gleicher Farbe durch eine Symmetrieoperation der Fliese im Fall der Kombination des Fliesentyps A mit dem Fliesentyp B durch eine Symmetrieoperation der Fliese des Fliesentyps A in Form des Fliesentyps B abbilden lässt, wobei die Symmetrieoperation eine C2 Rotation entlang einer Rotationsachse durch eine Spitze des Dreiecks und der Mitte zwischen den zwei übrigen Spitzen ist.

8. Bildgebungsverfahren mit Hilfe von Fliesen, wobei Fliesen aus dem Fliesensatz gemäß Anspruch 1 auf einem Untergrund so fixiert werden, dass die Kanten von aneinander angrenzenden Fliesen parallel zueinander verlaufen wobei zumindest zwei an eine Fliese angrenzende Fliesen vom jeweils anderen Fliesentyp sind und dass zumindest eine an die angrenzende Fliese wiederrum angrenzende Fliese vom selben Fliesentyp ist und gegenüber der ursprünglichen Fliese um 120° gedreht ist.

9. Bildgebungsverfahren gemäß Anspruch 8 **dadurch gekennzeichnet, dass** die Sichtseite einer Fliese zu der Sichtseite einer unmittelbar entlang einer Kante angrenzenden Fliese spiegelsymmetrisch verlegt ist, wobei das Spiegelelement ausgewählt ist aus
a. einer Punktspiegelung bezüglich des Mittelpunkts der Kante und
b. einer Achsenspiegelung bezüglich der Kante.

10. Computerprogramm umfassend Programmbefehle, die den Computer dazu veranlassen, das Bildgebungsverfahren gemäß Anspruch 8 zumindest teilweise zu simulieren, wobei Dreiecke, die gemäß den Bedingungen für das farbgebende Material aus Anspruch 1 erstellt wurden, nebeneinander so angeordnet werden, dass zwischen den Dreiecken gleichmäßige Fugen entstehen, wenn das Computerprogramm auf den Computer geladen oder auf dem Computer ausgeführt wird.

## Claims

1. Tile set having an appealing pattern provided by means of two triangular tile patterns, consisting of isosceles triangular tiles for covering floors or walls, comprising a combination of a tile type A and a tile type B, wherein in the tile set, colouring material selected from at least two different colours is arranged on the visible faces, wherein the colouring material can be mapped with the same colour by a symmetry operation of the tile of tile type A in the form of tile type B, wherein the symmetry operation is a C2 rotation along a rotation axis extending through a vertex of the triangle and the centre point between the two remaining vertices.

2. Tile set according to claim 1, **characterized in that** the triangular tiles are equilateral triangular tiles.

3. Tile set according to one of claims 1 or 2, **characterized in that** the tile set is a combination of a tile type A and a tile type B and the colouring material can be mapped with the same colour by a symmetry operation of the tile of tile type A in the form of tile type B by a C2 rotation along a rotation axis extending through a vertex of the triangle and the centre point between the two remaining vertices.

4. Tile set according to one of claims 1 to 3, **characterized in that** it comprises tile type A and tile type B in equal proportions.

5. Tile set according to one of claims 1 to 4, **characterized in that** the thickness of the colouring material is in a range of 0.01 to 2 mm.

6. Tile set according to one of claims 1 to 5, **characterized in that** the colouring material is an inorganic fired glaze or colour pigments applied by laser printing.

7. Method of providing a tile set according to claim 1, **characterized in that** the following steps are carried out:
a. providing a tile set of isosceles triangular tiles for covering floors or walls, comprising a combination of a tile type A and a tile type B,
b. applying colouring material selected from at least two different colours on the visible face, wherein the colouring material can be mapped with the same colour in the form of tile type B by a symmetry operation of the tile in case of a combination of tile type A with tile type B by a symmetry operation of the tile of tile type A, wherein the symmetry operation is a C2 rotation along a rotation axis extending through a vertex of the triangle and the centre point between the two remaining vertices.

8. Imaging method with the help of tiles, wherein tiles of the tile set according to claim 1 are fixed on a ground such that the edges of adjacent tiles run parallel, wherein at least two of the tiles adjacent to a tile are of the other tile type, and at least one tile in turn adjacent to the adjacent tile is of the same tile type and is rotated relative to the original tile by 120 degrees.

9. Imaging method according to claim 8, **characterized in that** the visible face of one tile is laid in mirror symmetry to the visible face of a tile directly adjacent along an edge, wherein the mirror element is selected from
a. a point reflection at the centre point of the edge and
b. an axial reflection at the edge.

10. Computer program comprising program commands making the computer at least partially simulate the imaging method according to claim 8, wherein triangles made according to the conditions for the colouring material according to claim 1 are arranged side by side such that uniform gaps are formed between the triangles when the computer program is loaded on the computer or executed on the computer.

## Revendications

1. Jeu de carreaux possédant un motif attrayant au moyen de deux modèles de carreau triangulaires, constitués de carreaux triangulaires isocèles pour revêtir des sols ou des murs, comprenant une combinaison du type de carreau A et du type de carreau B, dans lequel dans le jeu de carreaux, une matière colorante sélectionnée parmi au moins deux couleurs différentes est disposée sur le côté visible, ladite matière colorante ayant une même couleur respective pouvant être reproduite par une opération de symétrie du carreau de type A dans la forme du carreau de type B, l'opération de symétrie étant une rotation C2 le long d'un axe de rotation passant par un sommet du triangle et par le milieu des deux autres sommets.

2. Jeu de carreaux selon la revendication 1, **caractérisé en ce que** les carreaux triangulaires sont des carreaux triangulaires équilatéraux.

3. Jeu de carreaux selon la revendication 1 ou 2, **caractérisé en ce que** le jeu de carreaux est une combinaison d'un type de carreau A et d'un type de carreau B, et la matière colorante ayant une même couleur respective peut être reproduite par une opération de symétrie du carreau de type A dans la forme du type de carreau B, par une rotation C2 le long d'un axe de rotation passant par un sommet du triangle et par le milieu des deux autres sommets.

4. Jeu de carreaux selon l'une des revendications 1 à 3, **caractérisé en ce qu'**il contient le type de carreau A et le type de carreau B à chaque fois par moitié.

5. Jeu de carreaux selon l'une des revendications 1 à 4, **caractérisé en ce que** l'épaisseur de la matière colorante est de 0,01 à 2 mm.

6. Jeu de carreaux selon l'une des revendications 1 à 5, **caractérisé en ce que** la matière colorante est une glaçure inorganique cuite ou des pigments de couleur appliqués par impression laser.

7. Procédé pour élaborer un jeu de carreaux selon la revendication 1, **caractérisé en ce qu'**on exécute les étapes suivantes :
a. fourniture d'un jeu de carreaux composé de carreaux triangulaires isocèles pour revêtir des sols ou des murs, comprenant une combinaison d'un type de carreau A et d'un type de carreau B,
b. application d'une matière colorante choisie parmi au moins deux couleurs différentes sur le côté visible, dans lequel la matière colorante ayant une même couleur respective peut être reproduite par une opération de symétrie du carreau, dans le cas de la combinaison de type A avec le type B, par une opération de symétrie du carreau de type de carreau A dans la forme du type de carreau B,
dans lequel l'opération de symétrie comprend une rotation C2 le long d'un axe de rotation passant par un sommet du triangle et par le milieu des deux autres sommets.

8. Procédé de formation d'image à l'aide de carreaux, dans lequel des carreaux constitués d'un jeu de carreaux selon la revendication 1 sont fixés sur un support de telle façon que les bords des carreaux adjacents l'un à l'autre soient parallèles, et au moins deux carreaux adjacents à un carreau sont d'un type respectivement différent et en ce qu'au moins un carreau adjacent à son tour au carreau adjacent est du même type de carreau et est tourné de 120 ° par rapport au carreau initial.

9. Procédé de formation d'image selon la revendication 8, **caractérisé en ce que** le côté visible d'un carreau est posé en symétrie miroir par rapport au côté visible d'un carreau immédiatement adjacent le long d'un bord,
dans lequel la symétrie est sélectionnée parmi :
a. une symétrie de point par rapport au centre du bord, ou
b. une symétrie axiale par rapport au bord.

10. Programme informatique comprenant des instructions de programme qui engendrent l'exécution par l'ordinateur d'une simulation au moins en partie du procédé de formation d'image selon la revendication 8, dans lequel des triangles qui ont été élaborés conformément aux conditions concernant la matière colorante selon la revendication 1 sont disposés l'un à côté de l'autre de telle sorte que des joints uniformes se produisent entre les triangles, lorsque le programme est chargé sur l'ordinateur ou est exécuté sur l'ordinateur.
